# NEUE EUROPÄISCHE PATENTSCHRIFT

(11) **EP 0 338 580 B2**
(45) Veröffentlichungstag und Bekanntmachung des Hinweises auf die Entscheidung über den Einspruch: **03.01.2001**
(45) Hinweis auf die Patenterteilung: 20.07.1994
(21) Anmeldenummer: 89107230.8
(22) Anmeldetag: 21.04.1989
(51) Int. Cl.: A01K 1/02

(54) **Verfahren zum Betreiben einer Anordnung zur Haltung von Vieh**
Method for operating an arrangement for breeding livestock
Procédé de fonctionnement d'un agencement pour l'élevage du bétail

(30) Priorität: 21.04.1988 DE 3813471
(43) Veröffentlichungstag der Anmeldung: 25.10.1989
(73) Patentinhaber: Bugl, Helmut, D-72108 Rottenburg (DE); Häufele, Josef, sen., D-89155 Erbach (DE); Häufele, Josef, jun., D-89155 Erbach (DE)
(72) Erfinder: Bugl, Helmut, D-72108 Rottenburg (DE); Häufele, Josef, sen., D-89155 Erbach (DE); Häufele, Josef, jun., D-89155 Erbach (DE)
(74) Vertreter: Tiesmeyer, Johannes, Dr.

(56) Entgegenhaltungen:
- CH-A- 488 370
- DD-A1- 80 576
- DD-A1- 217 405
- DD-A1- 244 488
- DE-A1- 3 403 930
- DE-C1- 3 447 752
- GB-A- 2 165 373
- US-A- 4 478 175
- Sainsbury,D.: Pig Housing, Farming Press Ltd., Ipswich, 1976
- Porenlüftung 1, Arbeitsblatt Bauwesen BVA Gumpenstein, November 1979
- ALB Arbeitsblatt Landwirtschaftl. Bauwesen: Ferkel-Veranda, November 1974
- Bartussek, H.: Tiergerechter Stallbau aus: Praktische Landtechnik, 2/1986, S.40-42
- Haiger, A., Storhas, R. u. Bartussek, H.: Naturgemäße Viehwirtschaft, Stuttgart, 1988
- ALB Arbeitsblatt Landwirtschaftliches Bauwesen: Stallböden, April 1985
- Koomans, P.: De opfok van gespeende biggen in een open stal met stro; IMAG-publikatie 157, Wageningen, 1981
- "Aktuelle Arbeiten zur artgemässen Tierhaltung 1980" KTBL-Schrift 164 (1981)
- Housing and the welfare of the growing-finishing pig, Farm Building Progress (101), July 1990, S.25-28
- Artikel "Artgemässe Zuchtschweinehaltung" von M.Rist, Lebendige Erde, Heft 5/86, S.309-317
- Rist,M., Lunow,I., Staub, M. und Hoffmann, H.: Ethologische und physiologische Untersuchungen beim Einsatz von Ferkelnestern, Haltungssysteme und Verhaltensanpassungen, KTBL, 1975
- Fachbuch "Schweineställe" von Josef Ober und Dr. Heribert M. Blendl, BLV Verlagssgesellschaft mbH, München 1972, S.39-44 und 225,226
- Handbuch für landwirtschaftliches Bauen 2, "Schweineställe" von Dr. Günter Koller u.a., BLV Verlagsgesellschaft mbH, München 1981, S.62-67
- Fachbuch "Schweinezucht" von Prof. Dr. Wilhelm Zorn, Verlag Eugen Ulmer, Stuttgart, 1949, S.126-141
- Praktische Landtechnik, 39.Jahrgang, Heft 2, 10.Februar 1986, S.41-42
- "Einsatz der Ruhekiste als Nest für Saugferkel unter Verhaltens- und tierschützerischen Gesichtspunkten", von Dr. D. Marx und U.Kaminski, aus Schweine-Zucht und Schweine-Mast 37, Heft 6, 1989

## Beschreibung

Die Erfindung bezieht sich auf ein Verfahren zum Betreiben einer Anordnung zur Haltung von Schweinen, wobei die Haltung in mehrere Gewichtsbereiche, z. B. Saugferkel bis 10 kg, Aufzuchtferkel bis 30 kg und Mastferkel bis ca. 100 kg, die die Tiere nacheinander durchlaufen, unterteilt ist, unter Verwendung von Schlafboxen zumindest in einem Gewichtsberich, in denen die Tiere einzeln oder mehrere zusammen gehalten werden.

Für die Stallhaltung von Tieren, insbesondere von Schweinen, ist es ein Bestreben, ein möglichst wirtschaftliches Stallsystem bereitzustellen.

In den neueren Stallsystemen werden überwiegend Ganzspaltenböden verwendet, bei welchen die Exkremente der Tiere durch die Spalte in darunterbefindliche Auffangbehälter gelangen. Die Tiere befinden sich folglich ständig über ihren Exkrementen, deren Gerüche entsprechend hochsteigen, so daß sich Tiere mit besonders gut ausgebildeten Riechorganen, wie dies beispielsweise bei Schweinen der Fall ist, in einer solchen ümgebung nicht wohlfühlen können. Es ist nachgewiesen worden, daß Wohlbefinden und damit die Gewichtszunahme der Tiere bedeutend verbessert wurden, wenn das Stallklima optimal gestaltet wurde.

Hinzu kommt, daß in den bisherigen Ställen die Temperatur während des ganzen Tages, ja während der gesamten Mastperiode, Tag und Nacht fast konstant ist. Dabei wurde als optimale Lufttemperatur in Ställen allgemein 16 bis 25°C angenommen. Diese konstante Temperatur entspricht jedoch nicht dem normalen Temperaturanspruch für Lebewesen.

Die Einatemluft wiederum soll während des Schlafens wesentlich niedriger sein als die den Körper umgebende Temperatur. Während der Ruhe- und Schlafzeit beträgt die optimale Einatemlufttemperatur 10 bis 20°C, während die den Körper umgebende Lufttemperatur ca. 30 bis 36°C und darüber bei optimaler Luftfeuchtigkeit sein sollte. Daraus wird ersichtlich, daß die Tierhaltung in Stallsystemen neuerer Art mit gleicher Einatem- und Körperlufttemperatur sowohl der Gesundheit als auch dem sonstigen Wohlbefinden der Tiere nicht zuträglich ist. Wenn die Einatemlufttemperatur stimmt, dann ist die Temperatur der den Körper umgebenden Luft zu niedrig und der Energieaufwand im Körper führt zu Gewichtsverlusten bzw. zu schlechter Futterverwertung. Bei höheren Temperaturen, insbesondere der Einatemluft, wird hingegen der Kreislauf der Tiere sehr belastet, was zu Kreislaufstörungen mit oft tödlichen Folgen führt.

Es sind deshalb Stallsysteme entwickelt worden, bei denen versucht wird, durch Frischluftzufuhr und durch Heizung das Klima im Stall zu verbessern. Hierdurch steigen jedoch die Kosten der Tierhaltung sehr an, so daß die Rentabilität entsprechend sinkt.

Aus der DE-OS 33 10 595 ist ein Luftsystem zur Verbesserung des Luftklimas in Viehaufnahmebuchten bekannt. In diesen Buchten wird die Einatemluft von der übrigen Luft getrennt. Dazu wird die Einatemluft über Frischluftzufuhrdüsen im Einatembereich der Tiere zugeführt, wobei die Lufttrennung durch eine den Hals des Tieres umschließende Quermembran (Manschette) erfolgt. Des weiteren ist jeder Frischzuluftzuführdüse ein Abgasrohr für die gezielte Ausbringung der Ausatemluft zugeordnet. Im Körperluft-Teil der Bucht ist eine Warmluft-Düse mit laufender Luftzufuhr, also hohem Energieverbrauch, vorgesehen, die zum Stauen der den Körper umgebenden Luft und zur Erhöhung von deren Temperatur beiträgt (Bettsystem). Die notwendige manschettenartige Trennwand behindert allerdings die Bewegungsfreiheit der Tiere. Bei einer weiteren Ausführungsform der bekannten Bucht ist in dieser eine Anbindevorrichtung vorgesehen, an die das Tier angebunden sein und die auch eng am Körper des Tiers anliegen muß. Dadurch ist dem Tier ebenfalls weder innerhalb der Bucht noch außerhalb dieser eine freie Bewegung ermöglicht.

Eine weitere Anordnung zur Haltung von Vieh ist aus der DE-OS 34 47 753 bekannt geworden. Bei dieser weist die jeweilige Schlafbox im unteren Bereich derjenigen Stirnwand, dem das Tier normalerweise den Kopf zuwendet, eine relativ kleine Öffnung auf, über die die Schlafbox mit einer Vorrichtung zur Zuführung von Atemluft, einer sog. Atembox, verbunden ist. Diese Atembox ist also Teil der Schlafbox und beide Räume stehen stets in Verbindung miteinander. Diese Anordnung wurde, wie Versuche zeigten, von den Tieren nicht besonders gut angenommen. Ein Grund ist darin zu sehen, daß die kühlere Atemluft sich nicht nur in dem Einatembereich, sondern im ganzen Innenraum der Schlafbox ausbreitet, so daß die Gefahr einer zu niedrigen Temperatur in der Schlafbox besteht. Ein weiterer Grund resultiert aus der ungünstigen Anordnung der Atembox bzw. der die Atembox mit der Schlafbox verbindenden Öffnung. Letztere ist, wie schon erwähnt, in der Stirnwand der Schlafbox angeordnet, der das Tier wie gewöhnlich den Kopf zuwendet, und zwar im unteren Bereich dieser Stirnwand. Dadurch sollte das liegende Tier angeregt werden, seinen Kopf in die Nähe dieser Öffnung zu legen. Zum Aufstehen muß das Tier jedoch sich wieder rückwärtsbewegen, um von der Stirnwand der Box freizukommen, was der natürlichen Aufstehbewegung des Tiers nach vorne widerspricht. Schließlich räumt die bekannte Schlafbox dem Tier nicht eine ausreichende Bewegungsmöglichkeit ein.

Aus dem AT-Sonderdruck von M. Rist: "Grundsätzliches zur tiergerechten Nutztierhaltung und seiner Konsequenzen für tiergerechte Haltungsformen bei Zucht- und Mastschweinen". Gumpenstein (AT), 1982, S. 59 und 60, und CH-Separatdruck von M. Rist u.a.: "Zur tiergerechten Haltung von Ferkeln", CH-Zeitschrift "Kleinviehzüchter", Nr. 9-1976, S. 309-317, sind sogenannte künstliche und klimatisierte "Ferkelkisten" bekannt, die mit einem kleinen Lüfter sowie einer elektrischen und thermostatisch gesteuerten Heizung ausgerüstet sind. Die Stalluft wird an der Stirnseite der Kiste durch einen Kleinlüfter angesaugt, an einer Heizspirale vorgewärmt und durch eine Lochplatte im Überdruck in den Ruheraum der Ferkel gedrückt. Durch einen Schlupfvorhang aus Plastikstreifen vor einer Öffnung in der Ferkelkiste entweicht diese Warmluft in den Stall. Durch diese Überdrucklüftung wird ein Ansaugen von kalter Stalluft über die Ferkel umgangen. Die Ferkelkisten haben eine Grundfläche von 0,55 x 1,10 m, so daß darin der ganze Wurf bis zum Alter von 4 Wochen bequem Platz findet. Die in der Ferkelkiste untergebrachten Ferkel liegen in jeder Richtung verteilt in der Kiste und hinter dem Vorhang.

Es ist die Aufgabe der vorliegenden Erfindung, ein Verfahren zum Betreiben einer Anordnung zur Haltung von Schweinen, zu schaffen, die einerseits möglichst wirtschaftlich ist und andererseits gleichzeitig eine möglichst tiergerechte Haltung gewährleistet.

Diese Aufgabe wird erfindungsgemäß durch ein Verfahren nach Anspruch 1 gelöst. Weiterbildungen des erfindungsgemäßen Verfahrens sind den Unteransprüche zu entnehmen.

Das erfindungsgemäße Verfahren, bringt den großen Vorteil, daß eine genaue Trennung zwischen dem Körperbereich und dem Kopf- bzw. Atembereich des Tieres sichergestellt ist. Diese Trennung ermöglicht, daß die Temperaturen der Luft, die einerseits den Körper und andererseits den Kopf bzw. die Nase des Tieres umgibt, immer getrennt voneinander so aufeinander abgestimmt werden können, wie es den Bedürfnissen des Tieres entspricht. Einerseits werden durch eine entsprechend temperierte Einatemluft eine gute Futterverwertung und eine gute Qualität des Fleisches des aufgezogenen Tieres gewährleistet. Andererseits kann in der vom Einatembereich getrennt gehaltenen Box, in der während des Schlafens oder Ruhens der Körper des Tieres liegt, der Luftraum in der Box so klein wie möglich und nötig gehalten werden, wodurch entweder durch die eigene Körperwärme des Tieres oder aber bei nur geringem Energieeintrag eine optimale Temperatur für das Tier erzeugt wird (Bettsystem).

Die Öffnung in der Schlafbox gewährleistet ferner, daß die Tiere ungehindert ein- und ausgehen können und sie während des Schlafens oder Ruhens den Kopf ins Freie legen können. Dadurch haben die Tiere die gewünschte Bewegungsfreiheit.

Bei dem erfindungsgemäßen Verfahren werden vorzugsweise vier verschiedene Größen an Schlafboxen während der Aufzuchtzeit eingesetzt, wie z.B. für Saugferkel, Aufzuchtferkel, Mast und Zucht. In der kleinsten Schlafbox verweilen die Ferkel bis zu dem Erreichen eines Gewichts von ca. 10 kg; bis zu 30 kg werden die Ferkel in die mittelgroße Schlafbox eingebracht, während dann bis zum Erreichen eines Gewichts von 100 kg oder mehr die größte Box verwendet wird.

Bei der Schlafbox können mehr als nur eine Öffnung vorgesehen werden, so daß die Schweine wahlweise mit dem Kopf nach der einen oder anderen Seite liegen können. Der Körper liegt dabei immer in der Schlafbox und der Kopf im Freien mit entsprechend temperierter Einatem- und Kopfluft.

Gemäß der Erfindung ist durch die Schlafbox ein eigenständiger Körperbereich ausgebildet, in dem eine warme, den Körper des Tiers gleichmäßig umgebende, Luft als Umluft gefahren wird. So liegt der Körper des Tieres in der Schlafbox immer mit warmer Umluft umgeben, während es den Kopf durch den Vorhang nach außen legen kann.

Die Umluft kann so geführt werden, daß überall in der Schlafbox die gleichen Temperaturen erreicht werden können. Aufgrund der Tatsache, daß in der Box der Luftraum um das Tier nur so groß wie nötig gehalten wird, kann die optimale Umgebungstemperatur für den Körper des Tieres mit sehr geringer Energiezufuhr gehalten werden. Die Öffnungen des Zuluftrohres können als Schlitze, Löcher oder dergleichen ausgebildet sein, je nachdem, mit welchen Luftgeschwindigkeiten und Luftmengen gefahren werden soll. Da in der Schlafbox nur Umluft eingestellt wird, wird als weiterer Vorteil erreicht, daß die Luft sehr trocken ist. Dadurch ist die Wärme sehr angenehm und es können sich keine Bakterien in der Schlafbox entwickeln.

Um den Bedürfnissen des jeweiligen Tiers weiterhin zu entsprechen, darf in der Schlafbox kein Zug entstehen.

In der Schlafbox wird deshalb keine Warm- oder Frischluftzufuhr gefahren, sondern, wie schon erwähnt, nur Umluft. Dies führt zu einem niedrigen Energieverbrauch, und, da die Öffnungen durch Vorhänge abgedeckt sind, tritt kaum Wärmeverlust auf.

Der Boden sowie die Seitenwände und Abdekkung der Schlafbox können wärmeisoliert ausgebildet sein. Dadurch entsteht allenfalls ein niedriger Wärmeverlust durch die Wände der Schlafbox und es ist somit der Energieverbrauch gering.

Zusätzlich kann die Abdeckung der Box ein- oder mehrmals unterteilt sein und eine oder mehrere Klappen zum Öffnen aufweisen. Die Abdeckung kann von Hand oder automatisch entsprechend den Bedürfnissen der Tiere geöffnet oder geschlossen werden. Weiterhin kann die Schlafbox auch an einer Stirnseite mit einer leicht zu öffnenden und schließenden Klappe versehen werden. Diese Anordnungen erleichtern den Zugang zum Inneren der Schlafbox, um zum Beispiel neugeborene Ferkel in die Box legen zu können oder das Innere der Schlafbox zu besichtigen.

Die Schlafbox kann auch mit einer weichen Liegefläche versehen werden, um den Tieren den Komfort in der Schlafbox noch weiter zu erhöhen.

Der die Öffnung abdeckende Vorhang kann aus nebeneinander und oder hintereinander angeordneten Lamellen bestehen. Sämtliche Lamellen sind beweglich, um den Tieren das Ein- und Ausgehen sowie das Bewegen des Kopfes in den Einatembereich während des Schlafens oder Ruhens zu ermöglichen. Der Vorhang ist so ausgebildet, daß beim Liegen der Tiere, während sie mit den Kopf im Freien möglichst wenig Wärme verloren geht bzw. kaum kühlere Luft in den warmen Körperbereich gelangen kann. Der Vorhang kann wahlweise verschieden hoch und die einzelnen Lamellen können verschieden breit sein. Beispielsweise können im oberen Bereich des Vorhangs Lamellen größerer Breite und im unteren Bereich des Vorhangs Lamellen kleinerer Breite angeordnet sein. Nach einer weiteren Ausführungsform kann der Vorhang mehrschichtig bzw. mehrlagig ausgebildet sein. Bei der Ausführung von beispielsweise zwei hintereinander angeordneten Vorhängen ist der eine Vorhang im oberen Bereich der Öffnung der Schlafbox von Lamellen größerer Breite und der andere Vorhang im unteren Bereich der Öffnung von Lamellen kleinerer Breite gebildet. Der andere Vorhang kann den einen Vorhang auch überlappen und außerhalb des einen Vorhangs angeordnet sein. Wenn beispeilsweise die Tiere mit dem Kopf im Freien liegen, hängen die breiten oberen Lamellen vertikal. Der Kopf befindet sich zwischen den kleineren, längeren Lamellen, die an dem Kopf anliegen, um Wärmeverlust aus dem Körperbereich zu verhindern.

Das Umluftsystem kann auch für den Betrieb einer einzelnen Box oder mehrerer Boxen gemeinsam ausgelegt sein, wobei, wenn mehrere Schlafboxen gemeinsam betrieben werden, für die Luftaufbereitung ein Zentralgerät eingesetzt wird. Weiterhin kann für die Steuerung der Umluft, insbesondere für mehrere Boxen, eine einfache, von Hand bedienbare Klappe im zu- und Abluftrohr oder eine automatische Regeltechnik vorgesehen werden.

Die Schlafbox kann wahlweise auch ohne Umluft betrieben werden. Die erforderliche Wärme für die Schweine kann dann mit Infrarotlampen, Wärmestrahlern, Fußbodenheizung und sonstigen Zugluft vermeidenden Wärmequellen erzeugt werden. Die Wärmeverteilung in der Schlafbox ist dabei allerdings nicht so gleichmäßig wie mit warmer Umluft. Die klare Trennung in einen warmen Boxenbereich und einen kühlen Kopfbereich mit kalter bzw. für die Einatemluft temperierter Luft ist aber auch hier noch gewährleistet.

Die Verfahrens gemäße Anordnung kann so ausgestattet sein, daß die Schlafboxen, gegebenenfalls in verschiedenen Längen, einzeln, in Kreisform oder in Reihe neben- oder hintereinander angeordnet sind. Die kreisförmige Anordnung ist bei Schweinen besonders vorteilhaft, da der im Freien befindliche Kopf des Tiers dann in der Mitte der Kreisanordnung der Schlafboxen zu liegen kommt und die Köpfe weniger Raum benötigen als die Körper.

Auf alle Fälle ist immer darauf zu achten, daß in der Schlafbox immer nur soviel'Platz zur Verfügung gestellt wird, der für das jeweilige Tier entsprechender Größe gerade benötigt wird, um die mit der Erfindung angestrebten Erfolge zu erreichen. Sowohl Länge als auch Breite der Schlafbox sind also dem Bedarf der jeweiligen Tiere anzupassen. Dazu können die Seitenwände und die Decke der Box durch zum Beispiel stufenloses Verschieben den Größenverhältnissen der Tiere angepaßt werden. Durch derartige Maßveränderungen kann den Bedürfnissen des jeweiligen Tiers entsprochen werden. Dabei muß gewährleistet werden, daß jedes Tier seinen eigenen Platz so erhält, daß der Körper im warmen Teil der Schlafbox und der Kopf im Freien, also außerhalb des warmen Bereiches, liegen kann. Ein direktes Hintereinanderliegen der Tiere ist nicht sinnvoll, da dann der Kopf im warmen Bereich zu liegen kommen würde und die Einatemluft ebenfalls warm wäre. Bei kleineren Tieren muß nur ein kleinerer Schlafbereich temperiert werden und nur bei größeren Tieren ein größerer Raum, sofern ein Umstallen der Tiere nicht vorgenommen wird.

Zur Lüftung der Anordnung außerhalb den Schlafboxen nach einem erfindungsgemäßen Prinzip wird auf breiterer Front frische Luft zugeführt, so daß das Tier seine Nase irgendwo durch die Öffnung in der Schlafbox nach außen bewegen kann, wo überall frische Einatemluft vorhanden ist. Zur Regelung der Lüftung bzw. der Ein- und/oder Ausatem- oder Kopfluft außerhalb der Schlafbox kann die Anordnung mit verschieden konstruierten Einrichtungen versehen werden, im folgenden kurz Atemboxen genannt.

Bei benachbarten Schlafboxen zieht sich eine derartige Atembox kanalförmig längs den Boxen hin, ist also für diese Boxen eine gemeinsame Einrichtung.

Der Einatembereich kann in Form mindestens einer Atembox der Schlafbox zugeordnet sein. Nach einer Variante können die Atemboxen unterhalb des Einatembereichs angeordnet sein und mit einer luftdurchlässigen Abdeckung versehen werden. Nach einer weiteren Ausbildungsvariante der Atemboxen können in diesen zumindest ein Abluftkanal und/oder ein Zuluftkanal vorgesehen werden. In diesen Atemboxen können der Abluft- und der Zuluftkanal im wesentlichen nebeneinander vorgesehen werden, wobei der Abluftkanal mit geringerem Abstand zur Öffnung der Schlafbox als der Zuluftkanal angeordnet ist. Es ist auch von Vorteil, wenn der Abluftkanal mit einem Seitenkanal und/oder einem Bodenkanal in Verbindung steht. So kann beispielsweise verhindert werden, daß beim Absaugen der Atemluft entlang des Abluftkanals sich kein Luftzug über der Abdeckung bildet, wenn die Atemluft zusätzlich zum Abluftkanal auch in den zum Abluftkanal hin geöffneten, sonst aber geschlossenen Seiten- und Bodenkanälen abgezogen wird. Als weitere Ausbildung des Einatembereiches der Anordnung kann oberhalb der Atembox zum Umlenken der Zuluft ein Prallblech vorgesehen werden, um die Luftströmungsverhältnisse im Einatembereich weiter zu verbessern.

Gemäß einer anderen Möglichkeit kann eine Atembox oberhalb des Einatembereichs angeordnet sein, die nach unten luftdurchlässig ist. In dieser Atembox kann der Zuluftkanal in der Nähe der Öffnung und der Abluftkanal auf der der Öffnung abgewandten Seite des Zuluftkanals angeordnet sein. Eine derartige Atembox kann weiter so ausgebildet sein, daß zwischen der Öffnung und dem Zuluftkanal für die Zufuhr von temperierter Kopfluft ein Kopfluftkanal vorgesehen wird.

Gemäß einer anderen Ausgestaltung kann oberhalb des Einatembereiches eine Atembox mit einem Zuluftkanal und unterhalb des Einatembereiches eine weitere Atembox mit einem Abluftkanal vorgesehen werden. Die Unterseite dieses Zuluftkanals kann als Austritt für die Zuluft derart ausgebildet sein, daß die Zuluft entlang des Vorhangs nach unten strömt. Weiterhin können an der Luftaustritts-Unterseite dieses Zuluftkanals schmalere Luftaustritts-Schlitze, Löcher, Bohrungen oder dergleichen vorgesehen werden. Es ist von Vorteil, daß der Schlitz so breit ist, daß die Luftströmung laminar ist.

Auch während des Tages kann die Temperatur der Umluft, beispielsweise zwischen ca. 8 und 11 Uhr, wenn die Schweine sehr aktiv werden, abgesenkt werden, um Energie zu sparen (den Stromverbrauch niedrig zu halten).

Es kann bei der Anordnung einer Vielzahl von Schlafboxen in einem Stall die Frischluft für alle Schlafboxen von der Stalldecke her den Einatembereichen zugeführt werden und die Abluft durch in Unterflur-Atemboxen befindliche Abluftkanäle abgeführt werden.

Schließlich kann während der Aufzucht der Tiere die Temperatur der Umluft in den Schlafboxen den Bedürfnissen der Tiere angepaßt werden. Die Temperatur wird dabei stufenweise abgesenkt, um zum Beispiel neugeborene Ferkel während der ersten Phasen der Aufzucht an die tieferen Außentemperaturen anzupassen.

Der Erfindungsgegenstand wird nachfolgend anhand von in den Zeichnungen dargestellten Ausführungsbeispiele näher erläutert. Es zeigt:
- Fig. 1: eine perspektivische Ansicht einer bei dem erfindungsgemäßen Verfahren verwendeten Schlafbox;
- Fig. 2: eine perspektivische Ansicht einer zweiten Ausführungsform der Schlafbox nach Fig. 1;
- Fig. 3: eine schematische perspektivische Ansicht von zwei gegenüberliegenden Schlafboxen, die an einem Atemluftbereich angeordnet sind;
- Fig.4: eine schematische perspektivische Ansicht einer Ausführungsform des aus Lamellen bestehenden Vorhangs;
- Fig.5: eine schematische perspektivische Ansicht einer mit einer Atembox versehenen Anordnung;
- Fig. 6: eine schematische perspektivische Ansicht einer mit einer Atembox versehenen Anordnung, wobei die Atembox einen Zuluft-, Abluft- und Kopfluftkanal aufweist;
- Fig. 7: eine schematische perspektivische Ansicht einer Anordnung nach Fig. 5, deren Atembox mit einem Prallblech versehen ist;
- Fig. 8: eine schematische perspektivische Ansicht einer mit Atemboxen versehenen Anordnung, wobei eine Atembox mit einem Zuluftkanal oberhalb des Einatembereiches und eine weitere Atembox mit einem Abluftkanal unterhalb des Einatembereiches vorgesehen sind;
- Fig. 9: einen schematischen Querschnitt durch eine Anordnung, bei der die Frischluftzufuhr so geregelt ist, daß die gesamte Stalluft zwischen den Schlafboxen als frische Einatemluft geführt und durch eine Unterflur-Absaugung abgeführt wird; und
- Fig. 10: eine Draufsicht auf eine kreisförmige Anordnung aus mehreren Schlafboxen.

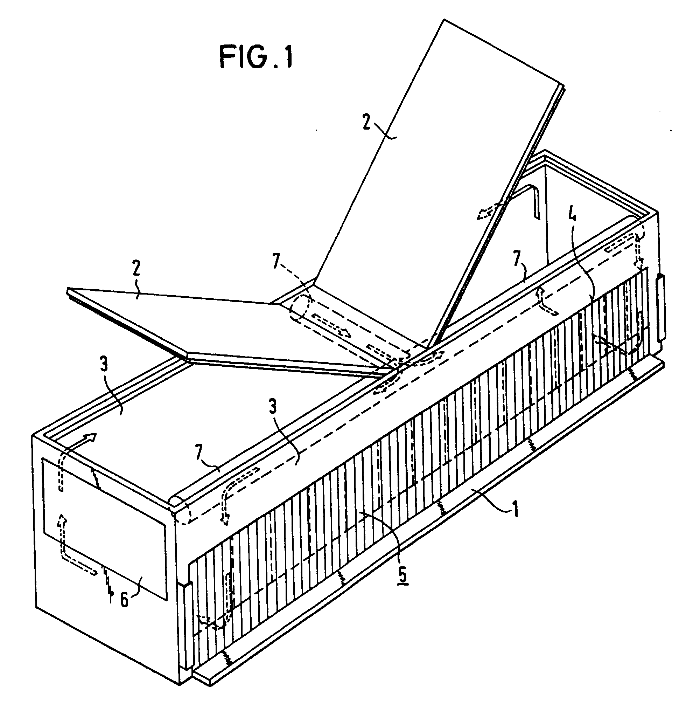

In Fig. 1 ist ein Ausführungsbeispiel einer Schlafbox der bei dem erfindungsgemäßen Verfahren verwendeten Anordnung dargestellt. Die Schlafbox besteht aus einem Boden 1, einer unterteilten und aufklappbaren Abdeckung 2, Seitenwänden 3 und einer an einer Stirnseite der Schlafbox vorgesehenen, leicht zu öffnenden und zu schließenden Klappe 6. Um Wärmeverlust zu verhindern, können die Strukturelemente 1, 2, 3 und 6 isolierte Bauteile sein. Diese Schlafbox weist ferner mindestens eine Öffnung 4 auf, die von einem einfachen oder mehrfachen Vorhang 5 abgedeckt ist. Für die Zirkulierung von warmer Umluft ist die Schlafbox mit einem Luftverteilrohr 7 versehen. Warme Luft wird dabei über eine Wärmeeinrichtung angesaugt und durch das Luftverteilrohr 7 in den Körperbereich ausgeblasen.

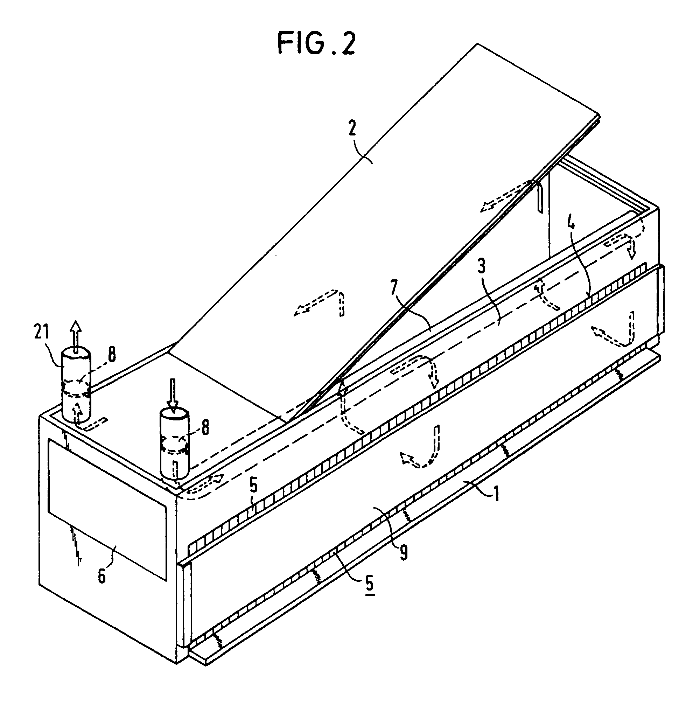

In Fig. 2 ist eine weitere Ausführungsform der in Fig. 1 gezeigten Schlafbox dargestellt. Diese Schlafbox weist ein Luftverteilrohr 7 und ein Abluftrohr 21 auf, durch die die Umluft im Körperbereich des Tieres gefahren wird. Das Luftverteilrohr 7 und das Abluftrohr 21 sind mit einer einfachen Klappe 8 versehen, wobei die Klappe von Hand oder mit einer automatischen Regeltechnik reguliert werden kann. Die Öffnung 4 der Schlafbox kann mit einem einfachen Brett 9 verschlossen werden.

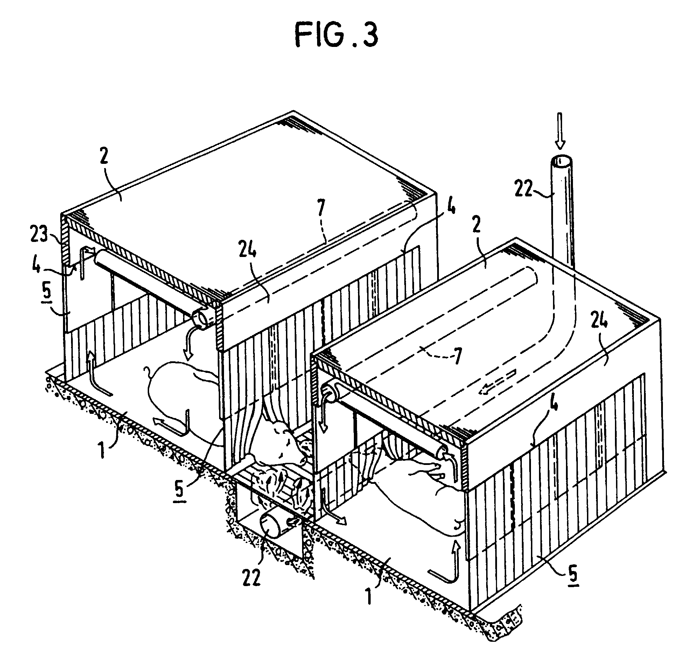

Fig. 3 zeigt eine Anordnung mit gegenüberliegenden Schlafboxen, wie in Fig. 1 oder 2 dargestellt, und einen Einatembereich, zu dem Atemluft durch ein Zuluftrohr 22 zugeführt wird. Die dargestellten Öffnungen 4 in den Wänden 23 und 24 können mit aus Lamellen bestehenden Vorhängen 5 versehen sein, um ein Ein- und Ausgehen der Tiere zu ermöglichen.

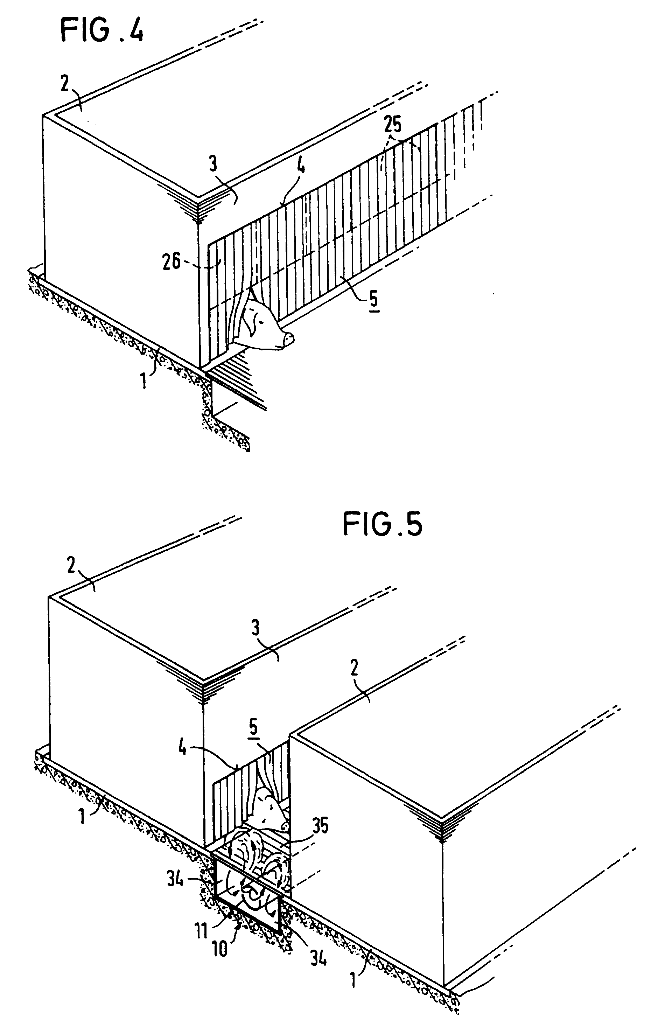

In Fig. 4 ist ein aus mehrfachen, verschieden hohen und breiten Lamellen bestehender Vorhang 5 dargestellt. Die kürzeren und breiteren Lamellen 25 hängen beim Liegen des Tieres vertikal oberhalb des Kopfes des Tieres, während sich dieser zwischen den schmäleren und langen Lamellen 26 befindet, die eng am Kopf anliegen. Somit ist sichergestellt, daß Verluste an warmer Luft durch den Vorhang 5 verhindert werden.

In Fig. 5 ist eine Einrichtung zur Regelung der den Kopfbereich des Tiers bzw. Schweins umgebenden Luft erkennbar, im folgenden kurz Atembox genannt. Die Atembox 10 weist eine Zuführung 11 für die aufbereitete Zuluft bzw. Einatemluft auf sowie einen Abluftkanal 34 für die Absaugung der von dem Tier ausgeblasenen Atemluft. Diese Atembox 10 ist an ihrer Oberseite mit einer luftdurchlässigen Abdeckung 35 versehen.

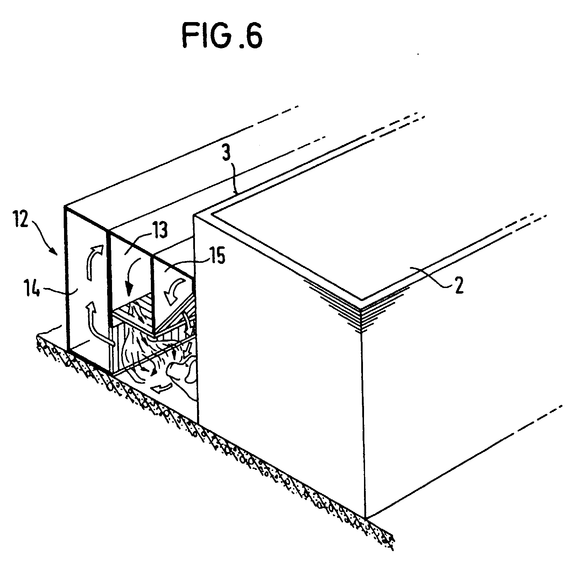

Fig. 6 zeigt ein anderes Ausführungsbeispiel einer Atembox 12. Diese weist an ihrer Oberseite eine Zuführung 13 für die Atemluft auf, einen Abluftkanal 14, durch den die Abfuhr von der vom Tier verbrauchten Luft vorgesehen ist, sowie einen Kopfluftkanal 15, durch den die Zufuhr der Kopfluft erfolgt.

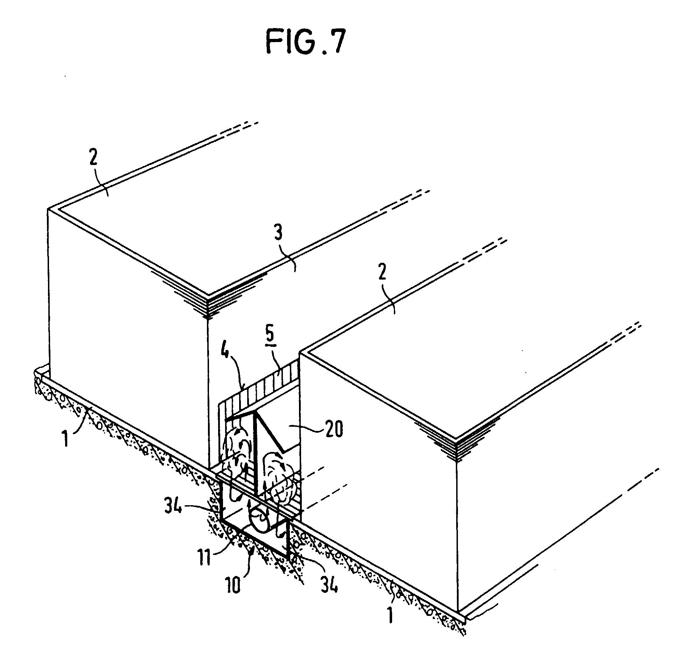

In Fig. 7 ist eine Anordnung mit einer Atembox nach Fig. 5 dargestellt, in der die Atembox 10 mit einem Prallblech 20 ausgestattet ist. Durch dieses Prallblech 20 wird die Zuluft 11 umgelenkt und die Abluft kann, wie aus Fig. 7 ersichtlich, besser abgesaugt werden.

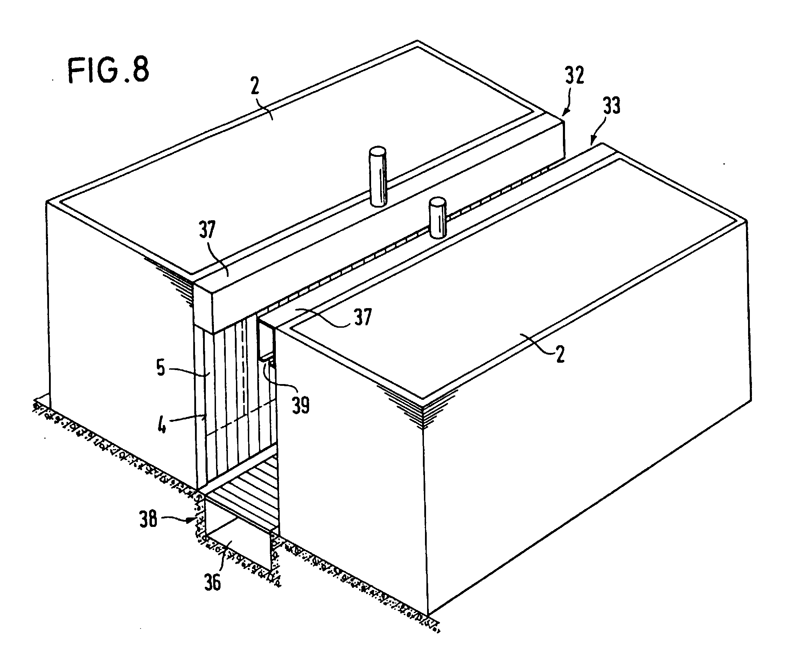

In Fig. 8 ist eine Atembox 32 oberhalb des Einatembereiches gezeigt. Die Einatemluft wird über einen Zuluftkanal 37 von oben mit Coandaeffekt entlang den Lamellen nach unten über die Köpfe und Nasen der Tiere hinweggeführt, um dann durch eine mit einem Abluftkanal 36 dargestellte Atembox 38 abgeführt zu werden. Weiterhin ist oberhalb des Einatembereichs eine Atembox 33 dargestellt, die zum Beispiel einen an der Unterseite des Zuluftkanals 37 vorgesehenen schmalen Schlitz 39 aufweist.

Die Luftaustrittsöffnungen der Atemboxen sind im übrigen nach den Bedürfnissen der Luftführung frei zu gestalten.

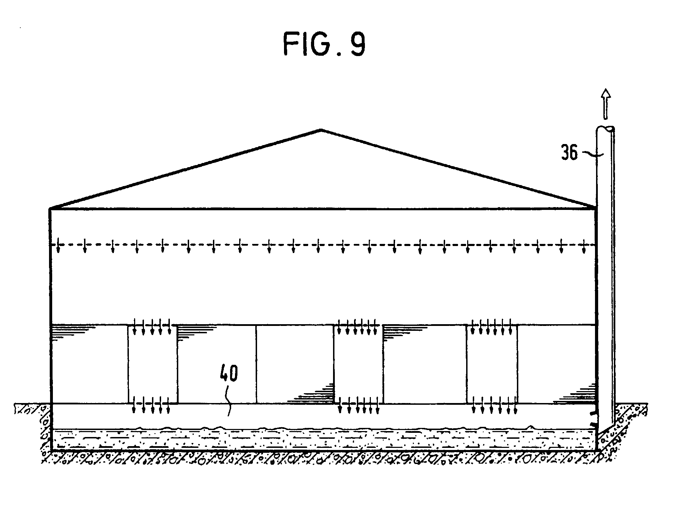

In Fig. 9 ist eine Anordnung mit einer Vielzahl von Schlafboxen dargestellt. Diese Anordnung weist an der Stalldecke eine Frischluftzufuhr auf, über die die gesamte Stalluft als Frischluft zwischen den Schlafboxen bzw. in den Einatembereich über die Köpfe und Nasen der Tiere hinweg geführt wird, um dann durch Unterflur-Absaugung 40 abgeführt zu werden. Diese Frischluftzufuhr kann z.B. über eine an sich bekannte Rieseldecke mit gleichmäßiger Verteilung der Luft über alle Schlafboxen hinweg erfolgen.

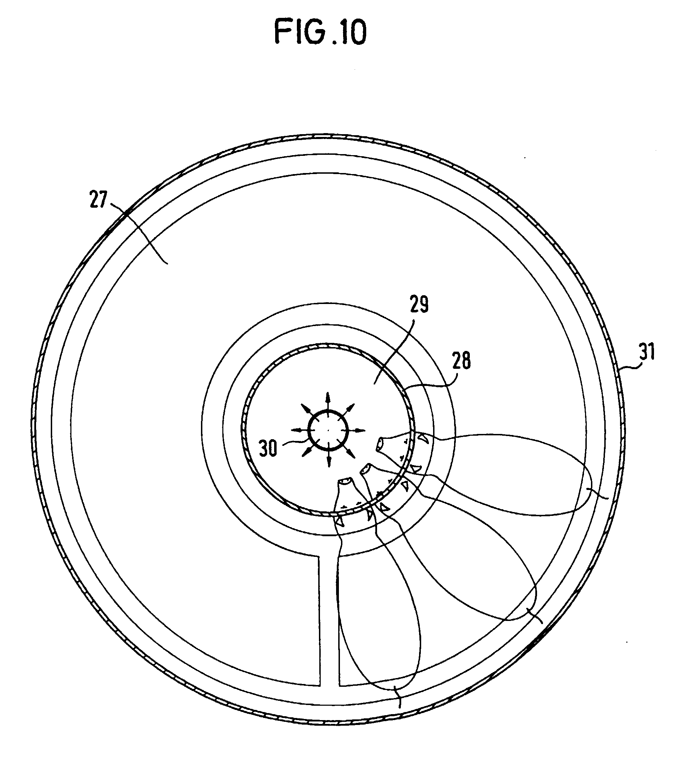

Der Fig. 10 ist eine aus mehreren Schlafboxen bestehende Anordnung in Kreisform entnehmbar. Sie ist besonders für Schweine geeignet. Die breiten Körper der Schweine sind im Körperbereich 27 der Anordnung positioniert, und die Köpfe der Schweine sind jeweils durch eine mit einem Lamellenvorhang abgedeckte Öffnung in der Innenwand 28 der Anordnung in den Einatembereich 29 bewegt, zu dem frische Atemluft durch ein Zuluftrohr 30 zugeführt wird. Das Hinein- und Hinausbewegen in bzw. aus der Box wird dem Schwein durch eine mit einem Lamellenvorhang abgedeckte Öffnung in der Außenwand 31 ermöglicht.

## Patentansprüche

1. Verfahren zum Betreiben einer Anordnung zur Haltung von Schweinen, wobei die Haltung in mehrere Gewichtsbereiche, z. B. Saugferkel bis 10 kg, Aufzuchtferkel bis 30 kg und Mastferkel bis ca. 100 kg, die die Tiere nacheinander durchlaufen, unterteilt ist, unter Verwendung von Schlafboxen zumindest in einem Gewichtsbereich, in denen die Tiere einzeln oder mehrere zusammen gehalten werden, wobei
- jede Schlafbox an mindestens einer Seite mit einer mit einem einfachen oder mehrfachen Vorhang abgedeckten Öffnung versehen ist, durch die das Tier bzw. jedes einzelne Tier unabhängig von den anderen Tieren die Schlafbox betreten bzw. verlassen kann, und
- eine hinsichtlich ihrer Abmessungen in der Richtung senkrecht zur Öffnung im wesentlichen der Länge der Tiere des Gewichtsbereichs entsprechende Schlafbox verwendet wird, in der der Luftraum so klein wie möglich und nötig gehalten wird, um zu gewährleisten, daß bei möglichst kleinem Luftraumvolumen jedes Tier seinen eigenen Platz so erhält, daß es mit dem Körper in der Schlafbox liegen und den Kopf bzw. die Nase durch den Vorhang in einen Einatembereich außerhalb der Schlafbox bewegen kann, und in der Schlafbox durch die eigene Körperwärme des Tieres oder aber nur bei geringem Energieeintrag über eine Umlufteinrichtung oder einen Wärmestrahler oder eine vergleichbare, Zugluft vermeidende Wärmequelle unter Vermeidung zwangsweiser Zufuhr frischer Außenluft eine solche optimale Temperatur für das Tier erzeugt wird,
- daß jedes Tier aus eigenem Antrieb seinen Kopf bzw. seine Nase durch den Vorhang in den Einatembereich außerhalb der Schlafbox bewegt, und
- daß die Temperaturen in der Schlafbox und in dem Einatembereich immer getrennt voneinander so aufeinander abgestimmt werden können, daß die Temperatur der Einatemluft während des Schlafens der Tiere wesentlich niedriger ist als die den Körper umgebende Temperatur in der Schlafbox.

2. Verfahren nach Anspruch 1, dadurch gekennzeichnet, daß eine Umlufteinrichtung vorgesehen ist, durch die der Luftraum der Schlafbox entsprechend den Bedürfnissen des Tieres aufbereitet wird.

## Claims

1. Method of operating an arrangement for keeping pigs, in which the keeping is divided into several weight ranges through which the animals pass in succession, in the case of for example sucking pigs to 10 kg, maturing pigs to 30 kg and fattening pigs to about 100 kg, and sleeping pens are used in at least one weight range in which the animals are kept individually or in groups,
wherein
each sleeping pen is provided on at least one side with an opening having a simple or multiple curtain, through which opening the animal or each individual animal independently of the other animals can enter or exit the sleeping pen, and
a sleeping pen is used which corresponds in respect of its dimensions in the direction perpendicular to the opening substantially to the length of the animals of the weight range so that the air space in the sleeping pen is kept as small as possible and necessary in order to ensure that, whilst keeping to the smallest possible air space volume, each animal is given its own space so that it can lie in the sleeping pen and it can move its head or nose through the curtain into an inhalation region outside the sleeping pen, and in the sleeping pen such an optimum temperature for the animal is produced either from the body heat of the animal itself or with only small energy input by means of a recirculation air device or a heat radiator or a comparable draft exclusion heat source whilst preventing the forced supply of fresh air from outside,
- that each animal moves its head or nose of its own volition through the curtain into an inhalation region outside the sleeping pen, and
- that the temperatures in the sleeping pen and in the inhalation region can always be mutually adapted to one another separately from one another so that the temperature of the inhalation air whilst the animal is asleep is substantially lower than the temperature surrounding the body in the sleeping pen.

2. Method according to claim 1, characterized in that a recirculation device is provided by means of which the air space of the sleeping pen is processed according to the requirements of the animal.

## Revendications

1. Procédé de fonctionnement d'un agencement pour l'élevage de porcs, l'élevage étant
subdivisé en plusieurs plages de poids, pour des porcs, par exemple des cochons de lait d'un poids allant jusqu'à 10 kg, des cochons d'élevage allant jusqu'à 30 kg, et des cochons d'engraissement d'un poids allant jusqu'à peu près 100 kg, plages de poids que les animaux passent les unes après les autres, avec utilisation de logettes de sommeil, au moins dans une plage de poids, logettes dans lesquelles les animaux sont gardés individuellement ou bien à plusieurs,
- chaque logette de sommeil étant pourvue en au moins une face d'une ouverture recouverte avec un rideau simple ou multiple, ouverture à travers laquelle l'animal respectivement chaque animal peut passer respectivement sortir de la logette de sommeil indépendamment des autres animaux,
et
- une logette de sommeil, correspondant quant à ses dimensions essentiellement à la longueur des animaux de la plage de poids considérée, dans la direction perpendiculaire à l'ouverture, étant utilisée de manière que le volume d'air enclos déterminé dans la logette de sommeil est minimisé et réduit au strict nécessaire, ainsi qu'
- une température optimale pour l'animal étant produit dans la logette de sommeil, du fait de la chaleur corporelle propre de l'animal ou bien par l'intermédiaire d'un dispositif de circulation d'air, ou un radiateur thermique, ou bien une source de chaleur comparable lorsque l'énergie est introduite en faible quantité et,
- de manière que chaque animal puisse déplacer par sa force propre sa tête, respectivement son groin, à travers le rideau, dans une zone d'inspiration située à l'extérieur de la logette de sommeil, et
- de manière que les températures dans les logettes de sommeil et dans la zone d'inspiration puissent toujours être déterminées séparément entre la zone d'inspiration et les logettes, de manière que la température de l'air inspirée pendant le sommeil des animaux soit notablement plus basse que la température environnant le corps dans la logette de sommeil.

2. Procédé selon la revendication 1, caractérisé en ce qu'est prévu un dispositif de circulation d'air, au moyen duquel le volume d'air de la logette de sommeil est traité de manière correspondant aux exigences des animaux.
